Europäisches Patentamt

(19) European Patent Office

Office européen des brevets

(11) Publication number: **0 148 863 B1**

# EUROPEAN PATENT SPECIFICATION

(12)

(45) Date of publication of patent specification: **16.12.92**   (51) Int. Cl.⁵: **G02B 6/245**, G02B 6/28

(21) Application number: **84902308.0**

(22) Date of filing: **25.05.84**

(86) International application number:
**PCT/US84/00820**

(87) International publication number:
**WO 84/04822 (06.12.84 84/28)**

(54) **POLARIZATION-INSENSITIVE, EVANESCENT-WAVE, FUSED COUPLER WITH MINIMAL ENVIRONMENTAL SENSITIVITY.**

(30) Priority: **26.05.83 US 498436**

(43) Date of publication of application:
**24.07.85 Bulletin 85/30**

(45) Publication of the grant of the patent:
**16.12.92 Bulletin 92/51**

(84) Designated Contracting States:
**DE FR GB**

(56) References cited:
**EP-A- 047 960        EP-A- 069 054
EP-A- 093 460        EP-A- 0 074 789
GB-A- 2 038 017      JP-A- 5 391 752
US-A- 4 054 366      US-A- 4 264 126
US-A- 4 315 666      US-A- 4 336 047
US-A- 4 354 760      US-A- 4 387 954**

**Electronics Letters, issued 27 March 1980,
R.A. Bergh et al.: "Single-Mode Fiber Optic
Directional Coupler", pp 260-261**

(73) Proprietor: **GOULD INC.**
**35129 Curtis Boulevard
Eastlake, Ohio 44095(US)**

(72) Inventor: **STOWE, David, W.**
**930 Ridgefield Lane
Buffalo Grove, IL 60090(US)**
Inventor: **KOPERA, Paul, M.**
**3219 Sunset
Franklin Park, IL 60131(US)**

(74) Representative: **Read, Matthew Charles et al
Venner Shipley & Co. 368 City Road
London EC1V 2OA(GB)**

IEEE Journal of Quantum Electronics, vol. QE-17, no. 6, issued June 1981, D.C. Tran et al.: "Single-Mode Fiber Directional Couplers Fabricated by Twist-Etching Techniques (Stabilization), pp 988-991

Qptics Letters, vol. 6, no. 7, issued July 1981, B.S. Kawasaki et al.: "Biconical-taper single-mode fiber coupler, pp 327-328

Qptics Letters, vol. 8, no. 10, issued Qctober 1983, B.K. Nayar et al.: "Monomode-polarization-maintaining fiber directional couplers, pp 543-545

Electronics Letters, vol. 17, no. 6, 19 March 1981, pp 243-244

Electronics Letters, vol. 18, no. 22, 28 Qctober 1982, pp 962-964

## Description

The present invention relates generally to optical waveguide couplers and more specifically to opical couplers using single-mode optical fibers that are insensitive to changes in polarisation.

Fiber optic couplers are commonly used to transfer light from one optical waveguide to another for a variety of functions. For example, fiber optic couplers are used in the communications field to convey large amounts of data rapidly. Other applications include measurement systems in which high-precision measurements are based upon an environmentally dependent shift in either the phase or wavelength of light travelling through an optical waveguide. Early couplers used for measurement applications had several disdvantages. For instance, the coupling ratio of early couplers typically varied with the pelarisation of the light passing through the coupler. Furthermore in some cases, the phase of the light passing through the coupler varies with polarisation, which was unsatisfactory for certain interfrometric sensor applications such as the passive quadrature demodulator coupler matrix.

Much of the technology developed in the past ten years for manufacturing couplers has centered around couplers which use multimode fibers. Multimode optical fibers are fairly large fibers, having a core diameter of the order of 40 micro-meters to 200 micro-meters. Some multimode fibers may be as large as 4 millimeters. While multimode fibers can be used to produce couplers for transferring polarised light from one fiber to another, they are typically undesirable because polarised light transmitted in a multimode optical fiber has a tendency to become depolarised. Single-mode fibers, on the other hand, are more capable of transmitting polarised light with minimal depolarisation of light during transmission over small distances. Due to the method in which single-mode fibers act to transmit only one mode of light, the core diameter of a single-mode fiber may be approximately ten times smaller than the core diameter of a multimode fiber. This has led to serious difficulties in manufacturing couplers using single-mode fibers. The invention described hereinbelow represents an advancement in the art in that it teaches methods for coupling single-mode fibers and for producing optical couplers that are insensitive to changes in polarisation.

The physical characteristics of a typical optical fiber will now be described briefly. In most instances, a fiber comprises an inner core having a relatively high index of refraction, a first cladding having a relatively low index of refraction, and a second cladding having a relatively high index of refraction, but not necessarily equal to the index of refraction of the core. This type of fiber is commonly called "W-fiber" by those skilled in the art because the refractive index profile of the fiber appears to resemble a "W". It should be noted that other types of fibers do not have a second cladding having a relatively high index of refraction.

JP-A-53-91752 discloses a method of manufacturing a coupler which can be used with single-mode fibers, in which cladding is removed from the optical fibers by etching or grinding. Then the optical fibers are positioned so that the surfaces of their nearly exposed cores face each other. By providing a force that pushes these surfaces towards one another, the surfaces are maintained in steady contact, and the contacted portions are heated so as to fuse the optical fibers together. In the reference, it is stated that the mere fusion of the two optical fibers does not produce a great coupling ratio between them. To overcome this problem, the reference teaches that the step of heating the coupling section should be carried out at an appropriate temperature to cause dopant from the cores to diffuse into the coupling region to cause an enlargement of the core diameters.

In contrast, the present invention is characterised by a simpler way of forming a coupler.

More particularly, according to the invention there is provided a method of making an optical fibre coupler that is insensitive to changes in polarisation, comprising the steps of: etching first and second longitudinal segments of respective first and second single-mode optical fibers each having a core and at least one surrounding cladding with a refractive index lower than that of the core, so as to remove a portion of the cladding; arranging and maintaining in contact longitudinal portions of the etched segments of the fibers in parallel juxtaposition; and fusing together said longitudinal portions maintained in said parallel juxtaposition to form a coupling region, wherein during said fusing, the longitudinal portions are held under axial tension, whereby to form the coupling region.

In order that the invention may be more fully understood an embodiment thereof will now be described by way of example with reference to the accompanying drawings wherein:

Fig. 1 is a frontal view of one embodiment of coupler described herein indicating the coupling region;

Fig. 2 is a frontal view of one embodiment of the coupler described herein illustrating a quartz housing in which the housing is broken away to provide a view of the coupling region;

Fig. 3 is an illustration partially in phantom of one embodiment of the subject coupler after encapsulation; and

Fig. 4 is an isometric illustration of one embodiment of the equipment used to fabricate the couplers described herein.

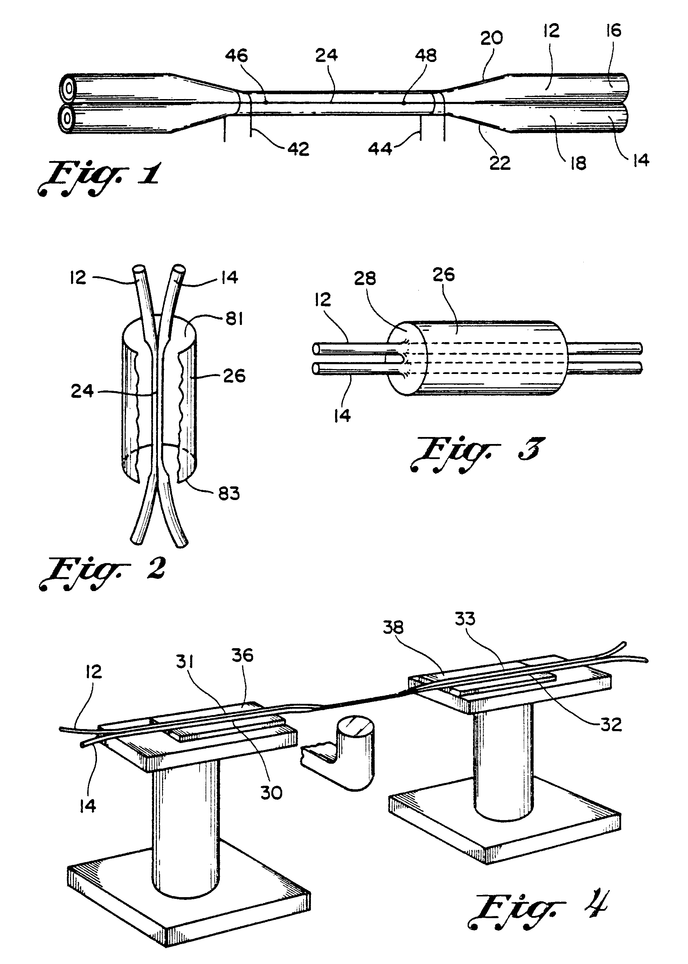

As discussed above, single-mode fibers are extremely fragile because of their minute size. The subject development, therefore, has been directed to providing a single-mode coupler which is relatively rugged, and is relatively insensitive, or stable, with respect to changes in polarization. Referring now to Fig. 1, first and second single-mode optical fibers 12, 14 are provided in the preferred embodiment of the subject development. Each optical fiber 12, 14 has a respective core and first and second claddings 20, 22 and 16, 18. The diameter of the core of each single-mode fiber is on the order of 5 micro-meters whereas the diameter of the cladding of each fiber is on the order of 75-125 micrometers. Thus, it should be recognized that when the core 20, 22 of each fiber is exposed, it is in a relatively delicate, or fragile, state. In the preferred embodiment of the subject development, each fiber 12, 14 has a longitudinal segment having a core and cladding diameter 20, 22 of approximately 15-50 micrometers. It should be obvious to one skilled in the art that the length of the longitudinal segment can be varied greatly without deviating from the intent of the subject invention. In the preferred embodiment, the exposed core length is approximately one centimeter in order to ensure complete coupling between the first optical fiber 12 and the second optical fiber 14. The longitudinal segments 20, 22 are fused together in coupling region 24. The invention described herein comprehends that throughout the coupling region, the first and second fibers 12 and 14 have cores which are maintained in linear parallel juxtaposition with one another.

Referring now to Fig. 2, the fused fibers 12, 14 of Fig. 1 are illustrated in a rigid housing 26. The method of placing the fused fibers within the housing will be discussed in greater detail hereinbelow. It is important to note, at this point however, that the housing provides a rigid support to fused fibers 12 and 14 throughout coupling region 24.

Referring now briefly to Fig. 3, after fibers 12 and 14 have been positioned in housing 26, the entire assembly is encapsulated in an rubber-like material 28. Encapsulation of the assembly provides a further means for stabilizing the subject device. The encapsulation material 28 may provide strain relief to the ends of the fibers 12, 14 which extend beyond the housing 26 because the housing may be encapsulated by a dipping technique in which the ends of the fibers are also coated with the encapsulation material.

The following description represents the currently preferred method of making the subject couplers. In the preferred embodiment, two single-mode fibers are prepared. A variety of single-mode fibers may be used, depending on the wavelength of operation of the coupler. Each coupler would be designed to be laser specific, that is, the fiber used for one wavelength of light may be made from a different material, and have a different core diameter and index of refraction than a coupler designed for another wavelength of operation. Important characteristics of any fiber chosen include: good concentricity, excellent core uniformity, and an appropriate refractive index profile. While various lengths of optical fiber may be used, the present procedure in the laboratory is to use two lengths of optical fiber that are 50 centimeters long. Each fiber has a plastic jacket and an RTV (room temperature vulcanizing silicone) coating. The plastic jacket is cut away and any RTV is removed with a hydrofluoric acid rinse.

Referring now to Fig. 4, after the fibers have been prepared as discussed above, each fiber 12 and 14 is placed in respective groves 30-33 of clamping devices 36, 38. The fibers are then cleaned with a hydrofluoric acid/water/alcohol rinses according to techniques known to those skilled in the art. After each fiber has been inspected for cleanliness, etching of the fibers is initiated. It is the object of the etching step of the procedure to remove the second cladding 16 and 18 of each fiber 12 and 14 (Fig. 1) to expose core and first cladding 20 and 22 along a coupling region 24 of each of the fibers so as to provide an appropriate index profile. An appropriate index profile is one in which the outer surface, or cladding, of each fiber has a lower index of refraction than the core of each fiber. Although a variety of etching techniques may be used, in view of the particular fiber used in the preferred embodiment, it is desirable to etch the subject fibers by a heated etching technique. In this technique, the fibers are placed in close proximity to an etching station which is heated by a thermoelectric module. A drop of etchant is placed on top of the etching station to etch a longitudinal portion of the fiber. After the fiber has been etched to the desired diameter, the fibers are then rinsed with water to prevent further etching. The very fragile etched longitudinal segments 20, 22 are then brought in parallel juxtaposition with one another by wrapping opposite ends of each exposed core length to one another with a thread or other wrapping material 42, 44. In the preferred embodiment, it has been found that a thin plastic sheet is desirable to prevent breakage of the fragile cores 20, 22. After the cores have been temporarily wrapped as discussed above to provide the desired parallel juxtaposition special relationship, a small drop of adhesive material is deposited on each end 46, 48 of the exposed core length adjacent to threads 42, 44. The glue is allowed to cure so that the cores 20, 22 remain in parallel juxtaposition with one another throughout coupling region 24 when threads 42 and 44 are removed from the exposed cores 20, 22.

The coupling region 24 of the fibers 12, 14 is then heated. In the laboratory technique used in the preferred embodiment, a lighted torch is simply passed along the coupling region 24 while the longitudinal segments are in axial tension until the segments 20, 22 are fused together throughout the length of the coupling region. A quartz tube 26 is then measured and cut to the desired length to surround the exposed cores of the subject coupler. In one embodiment, a slot extending the length of the quartz tube 26 may be provided to allow insertion of the tube about fibers 12, 14. In another embodiment, the tube may be cut in half longitudinally to allow each half to be simply placed about the fibers. The ends of the fibers 12, 14 are then glued to the ends 81, 83 of the quartz tube to suspend the etched and fused segments of the fibers containing the coupling region 24 in the approximate center of the tube 26. The glued assembly is then allowed to cure as necessary. The quartz tube is then dipped in a material to provide an elastic covering 28 over tube 26.

The invention described herein is insensitive to changes in polarization due to its unique design. In other single-mode, evanescent-wave couplers, birefringence resulting from twists, bends, stresses, or strains imposed on the fibers will cause changes in polarisation of light transmitted through the fibers. It is common practice in coupler manufacture to twist a pair of fibers about one another in order to maintain contact during fusing. By eliminating the need to twist the fibers about one another and by making bends in the fiber as gradual as possible, the polarization dependence of the coupling ratio is eliminated.

## Claims

1. A method of making an optical fibre coupler that is insensitive to changes in polarisation, comprising the steps of: etching first and second longitudinal segments of respective first and second single-mode optical fibers (12, 14) each having a core and at least one surrounding cladding with a refractive index lower than that of the core, so as to remove a portion of the cladding; arranging and maintaining in contact longitudinal portions of the etched segments of the fibers (12, 14) in parallel juxtaposition; and fusing together said longitudinal portions maintained in said parallel juxtaposition to form a coupling region, **characterised in that** during said fusing, the longitudinal portions are held under axial tension, whereby to form the coupling region.

2. A method according to claim 1 wherein said maintaining step includes wrapping portions of the segments with material (42, 44) such as not to deform substantially the etched segments of the fibers.

3. A method according to claim 2 wherein said maintaining step further includes bonding said segments whilst wrapped with said material (42, 44), and thereafter unwrapping the said material.

4. A method according to claim 3 wherein said bonding includes gluing said segments with a glue (46, 48) whilst wrapped with said material, and curing the glue.

5. A method according to claim 2, 3 or 4 wherein said wrapping material comprises plastic sheet material.

6. A method according to any preceding claim further including rigidly encapuslating the first and second longitudinal portions fused together in parallel juxtaposition.

7. A method according to claim 6 wherein said encapsulating step includes placing a tube (26) of a length substantially the same as that of said segments around the coupling region, and gluing the ends of the tube to the fibers so as to suspend the fibers within the tube.

8. A method according to claim 6 or 7 wherein the segments are encapsulated within a quartz tube (26).

9. A method according to claim 6, 7 or 8 wherein said segments are encapsulated within a slotted tube, and including the step of passing said segments through the slot in the tube.

10. A method according to claim 6, 7 or 8 wherein said segments are encapusulated in a tube formed of two longitudinal tube halves affixed to one another.

11. A method according to claim 8, 9 or 10 including coating the tube with an elastomeric material (28) such as to encase each end thereof.

12. A method according to any preceding claim wherein said coupling region has a length of approximately one centimeter.

13. A method according to any preceding claim including rinsing said segments with hydrofluoric acid prior to said etching.

## Patentansprüche

1. Verfahren zur Ausbildung eines optischen Faserkopplers, der gegen Änderungen der Polarisation unempfindlich ist, mit folgenden Schritten:
   Ätzen eines ersten und zweiten Längssegmentes einer ersten bzw. zweiten optischen Monomoden-Faser (12, 14), die jeweils einen Kern und wenigstens eine umgebende Umhüllung mit einem Brechungsindex aufweist, der niedriger als der Brechungsindex des Kerns ist, um so einen Teil der Umhüllung zu entfernen,
   in Berührungbringen und Halten von Längsteilen der geätzten Segmente der Fasern (12, 14), so daß sie parallel aneinander angrenzen, und
   Zusammenschmelzen der aneinander parallel anliegend gehaltenen Längsteile zur Bildung eines Kopplungsbereiches, dadurch **gekennzeichnet,** daß während dieses Schmelzens die Längsteile unter axialer Spannung gehalten werden, um hierdurch den Kopplungsbereich zu bilden.

2. Verfahren nach Anspruch 1, bei dem der Schritt des Inberührunghaltens das Umwickeln von Teilen der Segmente mit Material (42, 44) in der Weise umfaßt, daß die geätzten Segmente der Fasern nicht wesentlich verformt werden.

3. Verfahren nach Anspruch 2, bei dem der Schritt des Inberührunghaltens weiterhin das Verbinden der Segmente umfaßt, während sie mit dem Material (42, 44) umwickelt sind, sowie das hierauf folgende Abwickeln des Materials.

4. Verfahren nach Anspruch 3, bei dem das Verbinden das Kleben der Segmente mit einem Klebstoff (46, 48), während sie mit dem Material umwickelt sind, und das Aushärten des Klebstoffs umfaßt.

5. Verfahren nach Anspruch 2, 3 oder 4, bei dem das Umwickelungsmaterial Kunststofffolienmaterial umfaßt.

6. Verfahren nach einem der vorhergehenden Ansprüche, das weiterhin den Schritt des starren Einkapselns der miteinander in paralleler Berührung verschmolzenen ersten und zweiten Längsteile umfaßt.

7. Verfahren nach Anspruch 6, bei dem der Schritt des Einkapselns das Plazieren eines Rohrs (26), das im wesentlichen die gleiche Länge wie die Segmente aufweist, um den Kopplungsbereich und das Ankleben der Enden des Rohrs an den Fasern umfaßt, um so die Fasern in dem Rohr aufzuhängen.

8. Verfahren nach Anspruch 6 oder 7, bei dem die Segmente in ein Quarzrohr (26) eingekapselt werden.

9. Verfahren nach Anspruch 6, 7 oder 8, bei dem die Segmente in ein geschlitztes Rohr eingekapselt werden und das den Schritt des Hindurchführens der Segmente durch den Schlitz im Rohr umfaßt.

10. Verfahren nach Anspruch 6, 7 oder 8, bei dem die Segmente in ein Rohr eingekapselt werden, das aus zwei Rohr-Längshälften gebildet ist, die aneinander befestigt sind.

11. Verfahren nach Anspruch 8, 9 oder 10, das den Schritt umfaßt, das Rohr mit einem elastomeren Material (28) zu beschichten, um auf diese Weise jedes Ende des Rohrs zu umhüllen.

12. Verfahren nach einem der vorhergehenden Ansprüche, bei dem der Kopplungsbereich eine Länge von ungefähr 1 cm besitzt.

13. Verfahren nach einem der vorhergehenden Ansprüche, das den Schritt des Spülens der Segmente mit Flußsäure vor dem Ätzen umfaßt.

## Revendications

1. Procédé de réalisation d'un coupleur de fibres optiques qui est insensible à des changements de polarisation, comprenant les étapes qui consistent : à attaquer des premier et second segments longitudinaux de première et seconde fibres optiques monomodes respectives (12, 14) ayant chacune un coeur et au moins une gaine entourante ayant un indice de réfraction inférieur à celui du coeur, de manière qu'une partie de la gaine soit éliminée ; à disposer et maintenir en contact des parties longitudinales des segments attaqués des fibres (12, 14) en juxtaposition parallèle ; et à souder entre elles lesdites parties longitudinales maintenues dans ladite juxtaposition parallèle afin de former une région de couplage, caractérisé en ce que, durant ledit soudage, les parties longitudinales sont maintenues sous une tension axiale, afin de former la région de couplage.

**2.** Procédé selon la revendication 1, dans lequel ladite étape de maintien consiste à envelopper des parties des segments avec une matière (42, 44) d'une manière telle que les segments attaqués des fibres ne sont pas sensiblement déformés.

**3.** Procédé selon la revendication 2, dans lequel ladite étape de maintien consiste en outre à lier lesdits segments pendant qu'ils sont enveloppés de ladite matière (42, 44), et à dérouler ensuite ladite matière.

**4.** Procédé selon la revendication 3, dans lequel ladite liaison consiste à coller lesdits segments à l'aide d'une colle (46, 48) pendant qu'ils sont enveloppés de ladite matière, et à faire durcir la colle.

**5.** Procédé selon la revendication 2, 3 ou 4, dans lequel ladite matière d'enveloppement comprend une matière plastique en feuille.

**6.** Procédé selon l'une quelconque des revendications précédentes, consistant en outre à encapsuler rigidement les première et seconde parties longitudinales soudées entre elles en juxtaposition parallèle.

**7.** Procédé selon la revendication 6, dans lequel ladite étape d'encapsulage consiste à placer un tube (26) d'une longueur sensiblement égale à celle desdits segments autour de la région de couplage, et à coller les extrémités du tube aux fibres afin de suspendre les fibres à l'intérieur du tube.

**8.** Procédé selon la revendication 6 ou 7, dans lequel les segments sont encapsulés dans un tube de quartz (26).

**9.** Procédé selon la revendication 6, 7 ou 8, dans lequel lesdits segments sont encapsulés dans un tube fendu, et comprenant l'étape qui consiste à faire passer lesdits segments dans la fente du tube.

**10.** Procédé selon la revendication 6, 7 ou 8, dans lequel lesdits segments sont encapsulés dans un tube formé de deux demi-tubes longitudinaux fixés entre eux.

**11.** Procédé selon la revendication 8, 9 ou 10, consistant à revêtir le tube d'une matière élastomérique (28) afin d'en recouvrir chaque extrémité.

**12.** Procédé selon l'une quelconque des revendications précédentes, dans lequel ladite région de couplage à une longueur d'environ 1 centimètre.

**13.** Procédé selon l'une quelconque des revendications précédentes, consistant à rincer lesdits segments à l'acide fluorhydrique avant ladite attaque.

Fig. 1

Fig. 2

Fig. 3

Fig. 4